# EUROPEAN PATENT APPLICATION

(11) **EP 4 246 399 A1**
(43) Date of publication of application: **20.09.2023**
(21) Application number: 21891403.4
(22) Date of filing: 09.06.2021
(51) Int. Cl.: G06Q 10/08

(54) **DELIVERY ASSISTANCE SYSTEM**

(30) Priority: 12.11.2020 JP 2020188408
(71) Applicant: AISIN CORPORATION, Kariya-shi, Aichi 448-8650 (JP)
(72) Inventor: SAKAI, Takamitsu, Kariya-shi, Aichi 448-8650 (JP); SUGIURA, Tomonori, Kariya-shi, Aichi 448-8650 (JP); KURIWAKI, Yuichi, Kariya-shi, Aichi 448-8650 (JP); MATSUO, Mitsunori, Kariya-shi, Aichi 448-8650 (JP)
(74) Representative: TBK
(86) International application number: PCT/JP2021/021928
(87) International publication number: WO 2022/102154

(57) **Abstract**

There is provided a system that reduces a possibility of concurrence of cargo handling. A delivery assistance system includes a delivery destination information obtaining part that obtains delivery destination information including goods to be delivered, for each of a plurality of delivery destinations; a base information obtaining part that obtains base information including locations of a plurality of bases from which delivery vehicles that deliver the goods depart, and processing abilities of the delivery vehicles for the respective bases; and a delivery plan creating part that creates, based on the delivery destination information and the base information, delivery plans in which the delivery vehicles for the respective bases do not simultaneously perform cargo handling at the same delivery destination.

## Description

### TECHNICAL FIELD

The present invention relates to a delivery assistance system.

### BACKGROUND ART

Conventionally, there is known a technique for creating delivery plans used upon delivering goods to a plurality of delivery destinations. For example, Patent Literature 1 discloses a technique in which upon creating a delivery plan, a deliverable time slot which is a time slot in which a visit to a receiver is allowed for a delivery is used as a constraint.

### CITATIONS LIST

### PATENT LITERATURE

Patent Literature 1: JP 2020-4181 A

### SUMMARY OF INVENTION

### TECHNICAL PROBLEMS

In the conventional technique, simultaneous occurrence of cargo handling by a plurality of delivery vehicles is not prohibited, and thus, there has been a case of creating a delivery plan in which a plurality of delivery vehicles simultaneously perform cargo handling in a deliverable time slot at the same delivery destination.

The present invention is made in view of the above-described problem, and provides a system that reduces a possibility of concurrence of cargo handling.

### SOLUTIONS TO PROBLEMS

A delivery assistance system includes: a delivery destination information obtaining part that obtains delivery destination information for each of a plurality of delivery destinations, the delivery destination information including goods to be delivered; a base information obtaining part that obtains base information including locations of a plurality of bases from which delivery vehicles that deliver the goods depart, and processing abilities of the delivery vehicles for the respective bases; and a delivery plan creating part that creates, based on the delivery destination information and the base information, delivery plans in which the delivery vehicles for the respective bases do not simultaneously perform cargo handling at a same delivery destination.

A delivery assistance system includes: a delivery destination information obtaining part that obtains delivery destination information for each of a plurality of delivery destinations, the delivery destination information including goods to be delivered; a base information obtaining part that obtains base information including locations of a plurality of bases from which delivery vehicles that deliver the goods depart, and processing abilities of the delivery vehicles for the respective bases; and a delivery plan creating part that creates delivery plans for delivering the goods from the plurality of bases to the plurality of delivery destinations, determines whether the delivery plans include a plan in which the plurality of delivery vehicles simultaneously perform cargo handling at a same delivery destination, and recreates, when it is determined that the delivery plans include the plan, a plan in which the delivery vehicles for the respective bases do not simultaneously perform cargo handling at the same delivery destination, by modifying one of the delivery plans for one of the delivery vehicles with a relatively low priority.

Namely, the delivery assistance systems create delivery plans such that delivery vehicles for respective bases do not simultaneously perform cargo handling at the same delivery destination. Hence, a possibility of concurrence of cargo handling can be reduced.

### BRIEF DESCRIPTION OF DRAWINGS

FIG. 1 is a block diagram of a delivery assistance system.
FIG. 2A is a diagram showing an example of delivery plans and FIG. 2B is a diagram showing an example of base information.
FIG. 3 is a diagram showing an example of delivery destination information.
FIG. 4 is a diagram showing an example of delivery plans in which concurrence has occurred.
FIG. 5 is a flowchart of a delivery assistance process.

### DESCRIPTION OF EMBODIMENTS

Here, an embodiment of the present invention will be described in accordance with the following order:
(1) Configuration of a delivery assistance system;
(2) Delivery assistance process; and
(3) Other embodiments.

### (1) Configuration of a delivery assistance system:

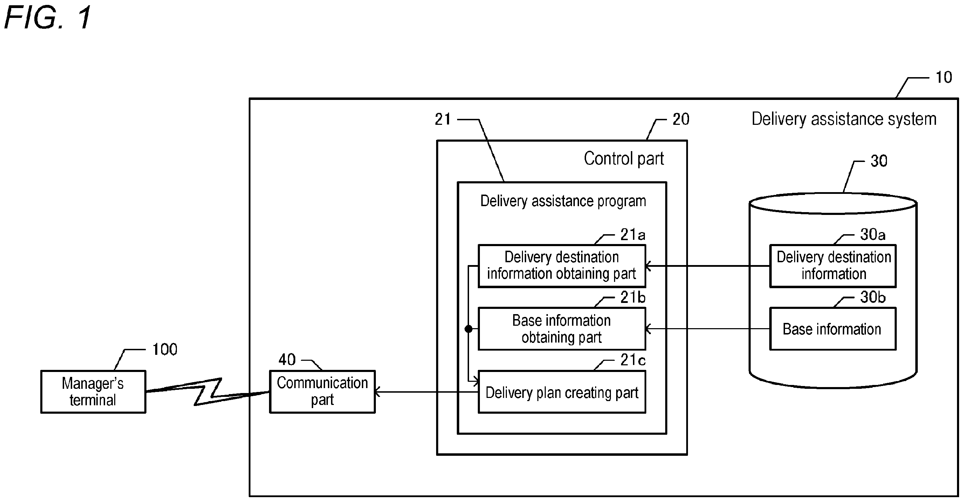

FIG. 1 is a block diagram showing a configuration of a delivery assistance system according to the present invention. In the present embodiment, the delivery assistance system is implemented by a server operated from a manager's terminal 100. The manager's terminal 100 can be implemented by, for example, a general-purpose computer, a portable terminal, etc., and includes a display, an operation input part, etc., which are not shown. A manager that manages operations of delivery vehicles belonging to a plurality of bases allows the delivery assistance system 10 to create delivery plans by operating the operation input part of the manager's terminal 100.

In the present embodiment, delivery plans are plans for one or more delivery vehicles that depart from each of a plurality of bases to visit a plurality of delivery destinations in a determined order and perform cargo handling to deliver goods at each delivery destination. In the present embodiment, delivery plans are created by defining order in which each of delivery vehicles belonging to a plurality of bases arrives at a plurality of delivery destinations, and a period during which each of the delivery vehicles performs cargo handling at each delivery destination.

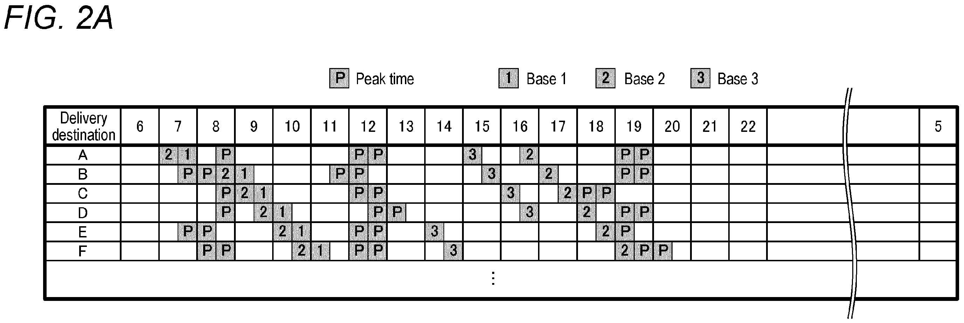

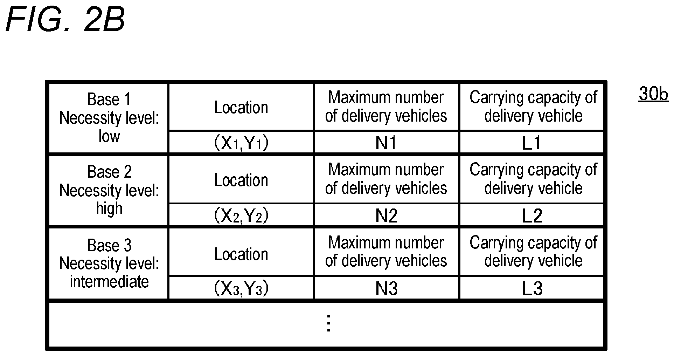

FIG. 2A is a diagram showing an example of delivery plans. In FIG. 2A, a plurality of delivery destinations are represented by identification information such as A to F. In addition, in FIG. 2, delivery plans for 24 hours are shown, partially omitted. In the delivery plans, a period during which cargo handling is performed is identified by a start time and an end time, and in the example shown in FIG. 2A, a period during which cargo handling is performed at the same delivery destination is fixed at 30 minutes, but may, of course, vary depending on the delivery destination, the volume of goods, etc.

In FIG. 2A, a plurality of bases are represented by identification information such as 1 to 3. Namely, FIG. 2A shows plans for delivering goods from three locations, the base 1 to the base 3, to the plurality of delivery destinations A to F. The number of delivery vehicles that depart from each base is any number, and when there are a plurality of delivery vehicles, plans for performing deliveries such that a plurality of delivery destinations are shared between the delivery vehicles are created. In FIG. 2A, for the sake of simplicity, a state in which one delivery vehicle departs from each base is assumed.

In FIG. 2A, a period during which a delivery vehicle that departs each base performs cargo handling is represented by numerical values 1 to 3. For example, a delivery vehicle that departs the base 1 performs deliveries in order of delivery destinations A, B, C, D, E, and F. In addition, a start time of a period during which the delivery vehicle having departed the base 1 performs cargo handling at the delivery destination A is 7:30 and an end time is 8:00, and a start time of a period during which the delivery vehicle having departed the base 1 performs cargo handling at the delivery destination B is 9:00 and an end time is 9:30. As such, by identifying a period during which a delivery vehicle that departs from each base performs cargo handling at each delivery destination, a delivery plan is defined.

In the present embodiment, a plan for a delivery vehicle to depart from the same base at different times of the same day can be created. For example, in the example shown in FIG. 2A, deliveries from the base 2 to each delivery destination are performed twice on the same day. For the delivery destination A, a delivery vehicle having departed the base 2 delivers goods twice, from 7:00 and from 16:30. To distinguish between them, in this specification, deliveries from the same base in different time slots are called "delivery services". For example, in the example shown in FIG. 2A, there are two delivery services a day from the base 2, and there is one delivery service a day from the base 1 and the base 3.

Note that in the present embodiment, the delivery destinations are stores, and the goods are products to be sold at each store. A peak time P is a time slot in which a store which is a delivery destination is busy, and in the present embodiment, a delivery plan is created such that cargo handling does not take place during the peak time P. Note that a mode of a delivery plan is not limited to a mode of this example, and a delivery plan may be defined by various modes.

The delivery assistance system 10 includes a control part 20 including a CPU, a RAM, a ROM, etc., a recording medium 30, and a communication part 40. The communication part 40 includes a circuit that gives and receives information to/from the manager's terminal 100. The control part 20 can perform communication with the manager's terminal 100 through the communication part 40.

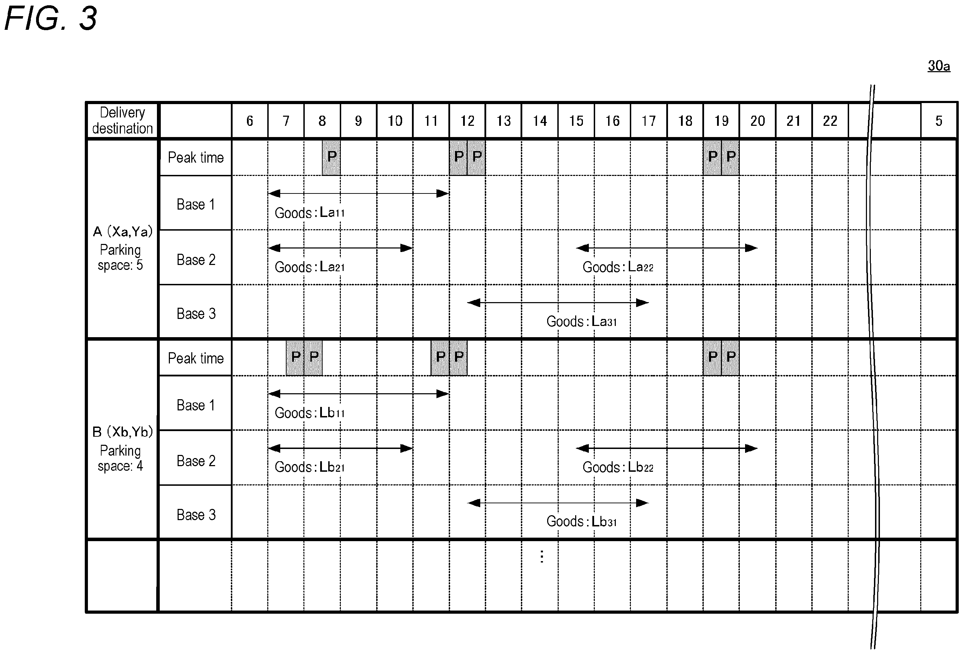

In addition, the recording medium 30 records delivery destination information 30a and base information 30b. The delivery destination information 30a includes at least information indicating a deliverable time slot and goods to be delivered, for each of a plurality of delivery destinations. FIG. 3 is a diagram showing an example of the delivery destination information 30a. In the example shown in FIG. 3, the delivery destination information 30a is defined for each delivery destination. Delivery destinations to which goods are delivered are present at a plurality of locations, and in the example shown in FIG. 3, delivery destinations A and B are exemplified. In addition, the delivery destinations are distinguished by identification information (delivery destinations A, B, etc.) indicating delivery destinations, and location information ((Xa, Yb), etc.) of each delivery destination is also associated with each delivery destination.

In FIG. 3, a deliverable time slot is a time slot in which cargo handling for delivery is allowed at a delivery destination, and is set for each delivery destination and for each base. For example, it is determined that a deliverable time slot in which a delivery vehicle that departs the base 1 is allowed to perform a delivery to the delivery destination A is from 7:00 to 12:00. Deliverable time slots in which a delivery vehicle that departs the base 2 is allowed to perform deliveries are from 7:00 to 11:00 and from 15:30 to 20:30. In the delivery destination information 30a, such a deliverable time slot is determined for each delivery destination and for each base. Note that a deliverable time slot is defined for each delivery destination and can vary between delivery destinations, but in the example shown in FIG. 3, all delivery destinations have common deliverable time slots. The example shown in FIG. 3 shows delivery destination information 30a defined before creating delivery plans, and in this case, a deliverable time slot for a given base is common for a plurality of delivery destinations. However, when creation of delivery plans starts and recreation of delivery plans is performed, deliverable time slots can be modified and thus can vary between delivery destinations.

Note that the delivery destination information 30a also includes the above-described peak time P. Namely, the peak time P is a time slot in which a delivery destination is busy, and thus is excluded from a deliverable time slot. Thus, for example, in the example shown in FIG. 3, deliverable time slots in which a delivery vehicle that departs from the base 1 can perform deliveries to the delivery destination A are from 7:00 to 8:30 and from 9:00 to 12:00.

The delivery destination information 30a further includes information indicating goods to be delivered. In the present embodiment, information indicating goods is defined for each delivery destination and for each base. Namely, in the present embodiment, each base is a point at which goods are loaded, and is, for example, a factory at which goods which are products are manufactured. Different bases handle different types of goods, and thus, different bases have different types of goods. Thus, in the delivery destination information 30a, the volume of goods for each base is associated with each delivery destination.

In addition, in the present embodiment, a plurality of delivery services can be performed from the same base on the same day. Hence, in the present embodiment, the volume of goods is associated with a delivery service (deliverable time slot). For example, in the example shown in FIG. 3, the volume of goods La₁₁ is associated with a deliverable time slot of the delivery destination A in which a delivery from the base 1 is performed, and the volumes of goods La₂₁ and La₂₂ are associated with respective deliverable time slots of the delivery destination A in which deliveries from the base 2 are performed. Note that in the example shown in FIG. 3, information indicating the size of a parking space (corresponding to the number of vehicles that can be parked) provided in each delivery destination is associated with each delivery destination. In this example, the size of a parking space is represented by an integer value, and the larger value indicates a larger parking space.

The base information 30b includes at least the locations of bases and the processing ability of a delivery vehicle for each base. FIG. 2B is a diagram showing an example of the base information 30b. In the base information 30b, the location ((X₁, Y₁), etc.) of each base, a maximum number (N1, etc.) of delivery vehicles that can deliver goods from each base, and the carrying capacity (L1, etc.) for each delivery vehicle are associated with each base. The maximum number of delivery vehicles and the carrying capacity of a delivery vehicle indicate the processing ability for goods that can be delivered from each base. Namely, in the present embodiment, the total volume of goods that can be delivered in a single delivery service is "the maximum number of delivery vehicles × carrying capacity". Note that although the present embodiment shows an example in which the carrying capacities of delivery vehicles are uniform for each base, if there are delivery vehicles having different carrying capacities at the same base, then the carrying capacity for each vehicle may be defined as base information 30b.

In the base information 30b of the present embodiment, a necessity level indicating whether goods shipped from each base are to be delivered early is associated with each base. Namely, when the types of goods shipped from bases differ from each other and the types of products which are goods differ from each other, for example, their best-before dates can differ from each other, and the degrees of change in the value of a product based on freshness can also differ from each other. As such, when the types of goods differ from each other, there can be goods whose early delivery is important, and goods whose early delivery is not important. Hence, in the present embodiment, it is considered that goods whose speed of reduction in the value of a product over time is higher have higher necessity for an early delivery. The base information 30b shows that the necessity level of goods shipped from each base is associated with the base. In FIG. 2B, the necessity level of goods shipped from the base 1 is associated with "low", the necessity level of goods shipped from the base 2 is associated with "high", and the necessity level of goods shipped from the base 3 is associated with "intermediate", and the necessity level is defined such that the necessity level gradually changes. Needless to say, the definition of the necessity level may have other modes, e.g., a definition that the necessity level continuously changes.

For the delivery destination information 30a and the base information 30b, information for a date for which plans are to be created is to be recorded in the recording medium 30 at least at the stage of creating delivery plans. Thus, when delivery plans are created on a day-by-day basis, at least day-by-day data is being recorded in the recording medium 30 upon making plans on a day-by-day basis. When plans are created collectively for a plurality of days, e.g., for one week, plans are to be created, with information for one week being recorded in the recording medium 30. Even when delivery plans are created in shorter units than one day, plans are to be created, with information in the shorter units being recorded in the recording medium 30.

Referring back to FIG. 1, the control part 20 can execute itself a program stored in the recording medium 30 or the ROM. In the present embodiment, as the program, a delivery assistance program 21 can be executed. When the delivery assistance program 21 is executed, the control part 20 functions as a delivery destination information obtaining part 21a, a base information obtaining part 21b, and a delivery plan creating part 21c.

By a function of the delivery destination information obtaining part 21a, the control part 20 obtains delivery destination information 30a. Namely, the control part 20 obtains delivery destination information 30a which is a part of information for creating delivery plans for a creation-target period. By a function of the base information obtaining part 21b, the control part 20 obtains base information 30b. Namely, the control part 20 obtains base information 30b which is a part of information for creating delivery plans for a creation-target period.

By a function of the delivery plan creating part 21c, the control part 20 creates, based on the delivery destination information 30a and the base information 30b, delivery plans such that delivery vehicles can perform cargo handling within deliverable time slots defined for each delivery destination. Namely, the control part 20 creates delivery plans such that a delivery vehicle having departed each base performs cargo handling within a deliverable time slot defined for each delivery destination and for each base such as that shown in FIG. 3. In the present embodiment, a delivery plan problem (vehicle routing problem) is solved based on the delivery destination information 30a and the base information 30b, and delivery plans are outputted. A process for solving the delivery plan problem is implemented by a vehicle routing problem (VRP) engine that uses publicly known algorithms.

Note, however, that the VRP engine used in the present embodiment outputs delivery plans in a state in which delivery vehicles for respective bases are allowed to simultaneously reach the same delivery destination. Hence, in the present embodiment, at the stage of initially creating delivery plans, concurrence between delivery vehicles having departed different bases can occur.

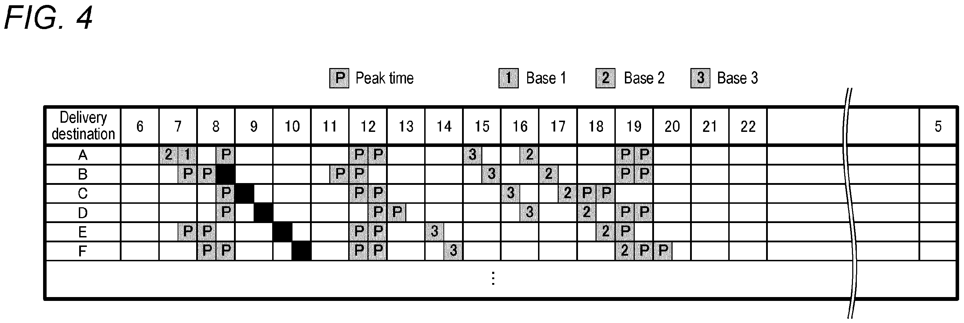

Hence, the control part 20 according to the present embodiment temporarily creates a delivery plan, and when the created delivery plan is a plan in which cargo handling is simultaneously performed at the same delivery destination, the control part 20 modifies the delivery plan. FIG. 4 shows an example of a case in which delivery plans in which concurrence has occurred are created in a process before creating delivery plans in which concurrence has not occurred (e.g., FIG. 2A).

FIG. 4 shows an example of delivery plans created based on the delivery destination information 30a shown in FIG. 3 and the base information 30b shown in FIG. 2B. In this example, a deliverable time slot for delivering goods from the base 1 to the delivery destinations A to F is a period in which a peak time of each delivery destination is excluded from the period from 7:00 to 12:00, and is defined for each delivery destination. When a process by the VRP engine is performed, delivery plans are created such that a delivery vehicle performs deliveries to the delivery destinations A to F within corresponding periods. For the base 2 and the base 3, too, likewise, delivery plans are created such that deliveries are performed from each base to the delivery destinations A to F in deliverable time slots defined for each base and for each delivery destination.

As shown in FIG. 3, at an initial stage, deliverable time slots defined for different bases overlap each other. Thus, a delivery plan can be created in which periods during which delivery vehicles from different bases perform cargo handling overlap each other at the same delivery destination. FIG. 4 shows an example of a case of thus creating plans including concurrence in which cargo handling is simultaneously performed at the same delivery destination, and a time slot in which concurrence has occurred is shaded in black.

In this example, a delivery plan is created in which a delivery vehicle having departed the base 2 performs cargo handling at the delivery destination A during the period from 7:00 to 7:30, and thereafter sequentially performs deliveries to the delivery destinations B to F; specifically, the delivery vehicle performs cargo handling at the delivery destination B from 8:30, avoiding a peak time P of the delivery destination B. On the other hand, in this example, a plan is created in which a delivery vehicle having departed the base 1 performs cargo handling at the delivery destination A during the period from 7:30 to 8:00, and thereafter sequentially performs deliveries to the delivery destinations B to F. However, the delivery vehicle having departed the base 1 also performs cargo handling at the delivery destination B, avoiding the peak time of the delivery destination B, and thus, in the example shown in FIG. 4, a delivery plan is created in which cargo handling is performed from 8:30. As a result, in the example shown in FIG. 4, plans are created in which the delivery vehicles having departed the base 1 and the base 2 cause concurrence at the delivery destinations B to F.

When such concurrence occurs during opening hours of a delivery destination, the delivery destination may get busy due to cargo handling, which may restrict customers' movements at the delivery destination, resulting in interference with business at the delivery destination. Hence, in the present embodiment, the control part 20 recreates a delivery plan by modifying a condition such that the concurrence does not occur. Specifically, the control part 20 obtains relative priorities between delivery vehicles, and determines a delivery plan for a delivery vehicle with a high priority on a priority basis. Namely, when delivery plans are created in which concurrence occurs between delivery vehicles having departed from different bases, the control part 20 determines a delivery plan for a delivery vehicle with a high priority and modifies a delivery plan for a delivery vehicle with a low priority.

Specifically, the control part 20 recreates a delivery plan by excluding a period during which a delivery vehicle with a high priority among delivery vehicles that are planned to simultaneously perform cargo handling performs cargo handling at a corresponding delivery destination from a period during which a delivery vehicle with a low priority can perform cargo handling at the delivery destination. Hence, the control part 20 determines priorities of the delivery vehicles having caused concurrence. The priorities may be determined based on various elements.

For example, a setting may be such that a delivery vehicle loaded with goods whose necessity for an early delivery is high has a higher priority than a delivery vehicle loaded with goods whose necessity for an early delivery is low. In this case, the control part 20 first identifies delivery vehicles that are planned to simultaneously perform cargo handling, by referring to delivery plans. Furthermore, the control part 20 identifies a delivery destination and a time slot in which concurrence has occurred, to identify bases for the delivery vehicles that cause the concurrence. Then, the control part 20 compares necessity levels associated with the bases for the respective delivery vehicles by referring to base information 30b, and determines that a delivery vehicle having departed from a base whose goods have a high necessity level has a higher priority. In the examples shown in FIGS. 2B and 4, goods of the base 2 have a higher necessity level than goods of the base 1, and thus, it is determined that a delivery vehicle having departed the base 2 has a higher priority than a delivery vehicle having departed the base 1. According to such priorities, a possibility can be reduced that a delivery plan is created by making a modification such that a delivery of goods whose necessity for an early delivery is high takes time.

In addition, a setting may be such that a delivery vehicle with small temporal leeway for moving along a delivery plan has a higher priority than a delivery vehicle with large temporal leeway. The temporal leeway is an index indicating whether a delivery vehicle can follow a delivery plan even if a delay occurs upon delivering goods to a plurality of delivery destinations. For example, in the examples shown in FIGS. 4 and 3, the end time of a deliverable time slot for goods of the base 1 is 12:00 and the end time of a deliverable time slot for goods of the base 2 is 11:00. In the example shown in FIG. 4, a scheduled time at which cargo handling at the delivery destination F ends is 11:00. Thus, if a delivery from the base 2 is delayed, then there is a high possibility that cargo handling cannot be completed within the deliverable time slot, but even if a delivery from the base 1 is slightly delayed, cargo handling can be completed within the deliverable time slot.

To complete cargo handling within a deliverable time slot, the length of time a delivery vehicle is required to spend within the deliverable time slot is to be relatively short. The temporal leeway is an index corresponding to such a length of time and can be calculated by various techniques. For example, it may be determined that the larger the proportion of time spent (a sum of moving time during which a delivery vehicle moves to a plurality of delivery destinations and cargo handling time during which cargo handling is performed) in the length of a deliverable time slot, the smaller the temporal leeway and the priority of the delivery vehicle is high. In this case, the control part 20 obtains deliverable time slots in which delivery vehicles causing concurrence are to perform deliveries to delivery destinations, by referring to delivery plans. In addition, the control part 20 obtains moving time required to move between delivery destinations, and cargo handling time for each delivery destination, by referring to the delivery plans for each delivery vehicle. The control part 20 calculates a sum of the moving time and the cargo handling time and divides the sum by the length of the deliverable time slot, thereby obtaining temporal leeway.

Note that the temporal leeway may also be calculated by various other techniques, and for example, the temporal leeway can be defined by the length of time for which a delay is allowed to complete cargo handling within a deliverable time slot, etc. In this case, the control part 20 identifies the length of time for which a delay is allowed to complete cargo handling within a deliverable time slot (a period of time from a time when cargo handling at the last delivery destination ends to an end time of the deliverable time slot), by referring to delivery plans, and determines that the shorter the time, the smaller the temporal leeway and the priority of a corresponding delivery vehicle is high. In addition, for example, a value obtained by dividing the number of delivery destinations by the length of a deliverable time slot may be considered to be temporal leeway. In this case, the control part 20 identifies a deliverable time slot in which a delivery vehicle causing concurrence is to perform a delivery to each delivery destination, and the number of delivery destinations, by referring to delivery plans. Then, the control part 20 calculates temporal leeway by "the number of delivery destinations/the length of the deliverable time slot". At any rate, the control part 20 determines that a delivery vehicle with smaller temporal leeway has a higher priority. According to such priorities, a possibility can be reduced that a delivery plan is created by making such a modification that makes it difficult for a delivery vehicle with small temporal leeway to perform activities.

Furthermore, a setting may be such that a delivery vehicle whose required time period that increases with a change in the order of deliveries is large has a higher priority than a delivery vehicle whose increasing required time period is small. Namely, if, when concurrence has occurred, the order of deliveries by delivery vehicles is changed, then the concurrence may be eliminated. Hence, the control part 20 fixes one of delivery plans for one of the delivery vehicles causing concurrence, and changes a delivery plan for the other delivery vehicle.

At this time, the larger the length of a required time period that increases with a change in the order of deliveries, the worse the efficiency of deliveries. Hence, the control part 20 identifies a required time period that increases when a change is made to the order of deliveries to a delivery destination where concurrence has occurred, by referring to delivery plans. For example, in the example shown in FIG. 4, delivery vehicles having departed the base 1 and the base 2 cause concurrence at the delivery destination B, and thus, the control part 20 assumes order in which the order of deliveries for the delivery destination B is changed the other way around. Specifically, there is assumed a case in which the order of delivery destinations A and B is changed to the order of delivery destinations B and A, or a case in which the order of delivery destinations B and C is changed to the order of delivery destinations C and B.

The control part 20 performs such an assumption about a change to the order for each of delivery vehicles causing concurrence, and obtains a total of required time periods (moving time and cargo handling time) for a case of performing movement and cargo handling in the changed order. Then, the control part 20 compares the required time periods increased by the change, and determines that a delivery vehicle with a large required time period has a high priority. According to such priorities, a possibility can be reduced that a delivery plan is created by making such a modification that worsens the efficiency of deliveries.

In the present embodiment, priorities are determined by at least one of the above-described settings. A configuration may be adopted in which in a case of considering a plurality of settings, when priorities cannot be determined by a given setting (priorities are identical), priorities are determined by a next setting, or priorities may be comprehensively determined based on priorities obtained by each setting, and various modes can be adopted.

At any rate, when priorities of delivery vehicles that are planned to simultaneously perform cargo handling at the same delivery destination are identified, the control part 20 determines a delivery plan for a delivery vehicle with the highest priority, and does not yet determine a delivery plan for a delivery vehicle whose priority is relatively low (a delivery plan to be recreated). Then, the control part 20 excludes cargo handling time during which the delivery vehicle is planned to perform cargo handling at the delivery destination from a deliverable time slot. Namely, the control part 20 recreates a delivery plan by excluding a period during which the delivery vehicle with a high priority performs cargo handling at the delivery destination from a period during which the delivery vehicle with a low priority can perform cargo handling at the delivery destination. For example, in the example shown in FIG. 4, when the priority of a delivery vehicle from the base 2 is higher than the priority of a delivery vehicle from the base 1, for the delivery vehicle from the base 1, 8:30 to 9:00 which is a period during which concurrence has occurred is excluded from a deliverable time slot of the delivery destination B.

As a result, a delivery plan is created with the concurrence having occurred in an existing delivery plan being eliminated. Hence, the control part 20 repeats recreation until there is no more concurrence, thereby creating delivery plans with no concurrence, e.g., delivery plans such as those shown in FIG. 2A. When the delivery plans are created, the control part 20 transmits information indicating the delivery plans to the manager's terminal 100 through the communication part 40. As a result, the manager displays the delivery plans on a display (not shown) connected to the manager's terminal 100. The manager can manage operations by, for example, transmitting the delivery plans to drivers of respective delivery vehicles for respective bases, based on the delivery plans.

According to the above-described configuration, a possibility can be reduced that concurrence of cargo handling occurs upon creating delivery plans for delivering, by a plurality of delivery vehicles, goods shipped from a plurality of bases to a plurality of delivery destinations. In addition, creation of delivery plans by the delivery plan creating part 21c is implemented based on a predetermined criterion which is determined in advance for each algorithm, e.g., cost (e.g., a required time period) is minimized. In the present embodiment, a delivery plan for a delivery vehicle with a high priority is determined on a priority basis, and thus, a delivery vehicle with a higher priority is more likely to have a plan that conforms to a predetermined criterion which is determined in advance for each algorithm.

In the present embodiment, when concurrence has occurred, the above-described delivery plan is recreated by excluding a period during which a delivery vehicle with a high priority performs cargo handling at a corresponding delivery destination from a period during which a delivery vehicle with a low priority can perform cargo handling at the delivery destination. Thus, when concurrence has occurred, only by repeating creation by making a modification to eliminate the concurrence, the concurrence can be eliminated. Hence, compared to a configuration in which constraints, etc., are imposed so that plans with no concurrence can be created by a single creation of delivery plans, delivery plans with no concurrence can be created by a simple process.

### (2) Delivery assistance process:

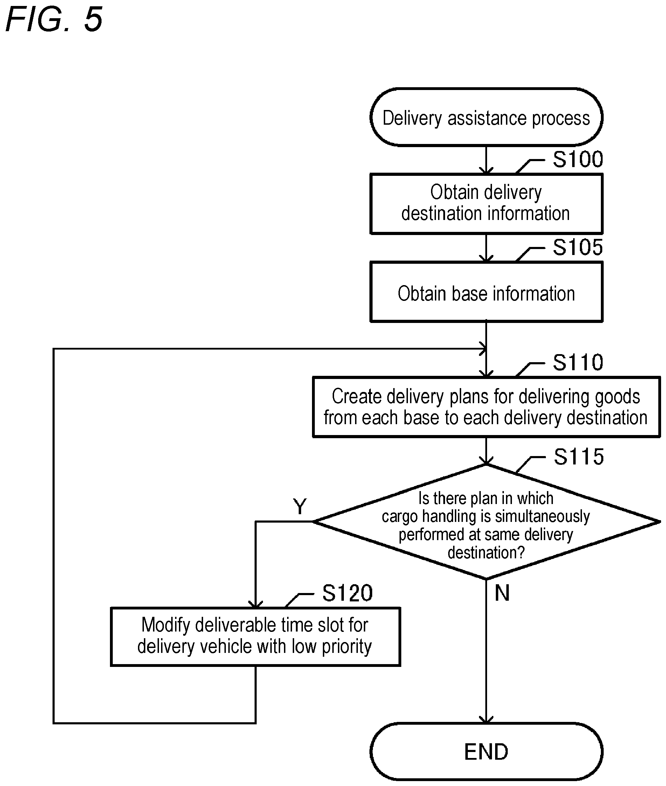

Next, a delivery assistance process performed by the control part 20 will be described. FIG. 5 is a flowchart showing a delivery assistance process performed by the control part 20. In the present embodiment, the delivery assistance process is performed, with delivery destination information 30a and base information 30b for a period for which delivery plans are to be created being recorded in the recording medium 30. In addition, the delivery assistance process may start based on various triggers. In the present embodiment, the delivery assistance process starts based on the fact that the manager's terminal 100 has instructed to start the delivery assistance process and the control part 20 has obtained the trigger through the communication part 40.

When the delivery assistance process starts, the control part 20 obtains delivery destination information 30a, by a function of the delivery destination information obtaining part 21a (step S100). Namely, the control part 20 obtains delivery destination information 30a for a period for which delivery plans are to be created, by referring to the recording medium 30. Then, the control part 20 obtains base information 30b by a function of the base information obtaining part 21b (step S105). Namely, the control part 20 obtains base information 30b for a period for which delivery plans are to be created, by referring to the recording medium 30.

Then, the control part 20 creates delivery plans for delivering goods from each base to each delivery destination, by a function of the delivery plan creating part 21c (step S110). Namely, the control part 20 creates delivery plans by obtaining output from the VRP engine, with the delivery destination information 30a obtained at step S100 and the base information 30b obtained at step S105 being input parameters.

Then, the control part 20 determines whether there is a plan in which cargo handling is simultaneously performed at the same delivery destination, by a function of the delivery plan creating part 21c (step S115). Namely, the control part 20 identifies, for each delivery destination, a period during which each delivery vehicle performs cargo handling, by referring to output results at step S110. Then, the control part 20 determines whether there is a plan in which cargo handling is performed at the same delivery destination and for the same period.

If it is determined at step S115 that there is a plan in which cargo handling is simultaneously performed at the same delivery destination, then the control part 20 modifies a deliverable time slot for a delivery vehicle with a low priority, by a function of the delivery plan creating part 21c (step S120). Namely, when there is a plan in which cargo handling is simultaneously performed at the same delivery destination, for example, concurrence such as that shaded in black in FIG. 4 has occurred. In this case, the control part 20 determines the priorities of delivery vehicles causing concurrence, identifies a delivery vehicle with the highest priority among the delivery vehicles, and makes a modification to exclude a cargo handling period of the delivery vehicle with the highest priority from a deliverable time slot of the delivery destination defined for a delivery vehicle other than the delivery vehicle with the highest priority.

Then, the control part 20 determines a delivery plan for the delivery vehicle with the highest priority, by a function of the delivery plan creating part 21c. In addition, for the delivery vehicle with a low priority, the control part 20 recreates, at step S110, a delivery plan in which cargo handling is performed within the modified deliverable time slot. If it is not determined at step S115 that there is a plan in which cargo handling is simultaneously performed at the same delivery destination, then the control part 20 ends the delivery assistance process.

### (3) Other embodiments:

The above-described embodiment is an example for carrying out the present invention, and various other embodiments can also be adopted. For example, each system included in the above-described embodiment may include a smaller number of devices. As an example of such a case, there is an example in which the delivery assistance system 10 includes a plurality of systems. For example, some of the functions of the delivery assistance system 10 may be implemented by the manager's terminal 100 or may be implemented by a cloud server.

Furthermore, in the above-described embodiment, a user of the manager's terminal 100 is a person who manages operations, but the manager is not limited thereto. For example, the manager may be a person belonging to a base or may be a person belonging to an entity that places an order. Furthermore, the manager's terminal 100 may be provided in a vehicle or may be a portable terminal, etc. In addition, at least one of the parts (the delivery destination information obtaining part 21a, the base information obtaining part 21b, and the delivery plan creating part 21c) included in the delivery assistance system 10 may be present separated into a plurality of devices. In addition, a configuration in which some components of the above-described embodiment are omitted or a configuration in which processes are changed or omitted can also be assumed.

The delivery destination information obtaining part may be configured in any manner as long as the delivery destination information obtaining part can obtain delivery destination information including a deliverable time slot and goods to be delivered, for each of a plurality of delivery destinations. Namely, as input information for creating delivery plans, information about delivery destinations are to be obtained as delivery destination information. At least a part of the delivery destination information may be created by a user that uses the delivery assistance system, or may be created by an orderer for each delivery destination, etc., or may be created by both. At any rate, before creating delivery plans, delivery destination information is to be defined in advance and to be obtained by the delivery assistance system.

A deliverable time slot is defined for each delivery destination, but for example, at an initial stage, all delivery destinations have the same deliverable time slot. When delivery plans are recreated, a deliverable time slot can vary between delivery destinations. In this case, a deliverable time slot may vary between delivery vehicles or between bases. Namely, to exclude a period during which cargo handling can be performed, a deliverable time slot may be modified for each delivery vehicle or for each base.

A deliverable time slot is a time slot in which a delivery vehicle can perform cargo handling, and a delivery plan is to be created such that cargo handling is performed within the time slot. Thus, a period to be included in a deliverable time slot may be a period from the start to end of cargo handling at a delivery destination, or may be a period from when a delivery vehicle arrives at a delivery destination until the delivery vehicle departs, and may be any period corresponding to a period for cargo handling.

Goods to be delivered may be any goods that indicate goods to be delivered for each delivery destination, and any unit may be used. Thus, the number of products, etc., may be used, weight, etc., may be used, or the number of lots, etc., may be used. Goods for each delivery destination may be identified for each deliverable time slot as in the above-described embodiment, or may be identified independently of the time slot. In the latter case, goods may be assigned to delivery services that perform deliveries in different time slots, upon creating a delivery plan. Needless to say, goods may be any article to be delivered to a delivery destination, and in addition to products, various types of articles such as packages and mail can be assumed.

The base information obtaining part may be configured in any manner as long as the base information obtaining part can obtain base information including the locations of a plurality of bases from which delivery vehicles that deliver goods depart, and the processing abilities of the delivery vehicles for the respective bases. Namely, as input information for creating delivery plans, information related to bases, such as the bases themselves or delivery vehicles associated with the bases, are to be obtained. At least a part of the base information may be created by a user that uses the delivery assistance system, or may be created by a manager for each base, etc., or may be created by both. At any rate, before creating delivery plans, base information is to be defined in advance and to be obtained by the delivery assistance system.

A delivery vehicle is preferably a truck, but may be any form of vehicle. In the above-described embodiment, a delivery vehicle is associated with each base, but a mode may be adopted in which a delivery vehicle loads goods at a plurality of bases and then delivers the goods to delivery destinations. In addition, a delivery vehicle associated with a base may be identified on at least a day-by-day basis, and a mode may be adopted in which a delivery vehicle having departed from the base 1 on a given day departs from the base 2 different from the base 1 on another day. A base is a location where a plurality of goods are accumulated, and the goods are loaded into a plurality of delivery vehicles at the base. Thus, the base may be a factory in which goods are manufactured or may be a location where goods shipped from a plurality of points are gathered and are loaded into delivery vehicles.

The processing ability of a delivery vehicle for each base is to indicate the total volume of goods that can be delivered. Thus, in addition to a configuration in which a loadable volume for each delivery vehicle and a maximum number of delivery vehicles that can be in service are identified as in the above-described embodiment, various configurations can be adopted. For example, if the loadable volumes of delivery vehicles are uniform, then the processing ability can be defined only by the maximum number of delivery vehicles.

The delivery plan creating part may be configured in any manner as long as the delivery plan creating part can create, based on delivery destination information and base information, delivery plans in which delivery vehicles can perform cargo handling within corresponding deliverable time slots defined for each delivery destination, and delivery vehicles for respective bases do not simultaneously perform cargo handling at the same delivery destination. Namely, the delivery plan creating part may be configured in any manner as long as the delivery plan creating part can create a delivery plan such that concurrence of cargo handling does not occur, which is included in delivery plans to be created.

Thus, in addition to a configuration in which, as in the above-described embodiment, when concurrence of cargo handling has occurred, a delivery plan for a delivery vehicle with a high priority is determined on a priority basis and a delivery plan for a delivery vehicle with a low priority is created again, various configurations can also be adopted. For example, the delivery plan creating part may be configured to create delivery plans by imposing a constraint that concurrence of cargo handling does not occur. Note that creation of delivery plans can be implemented by an algorithm that accepts, as input, delivery conditions and outputs delivery plans, and for example, publicly known algorithms can be used.

A state in which delivery vehicles for respective bases do not simultaneously perform cargo handling at the same delivery destination is a state in which at least parts of cargo handling periods at the same delivery destination overlap each other. Namely, it is assumed that delivery vehicles at the same base do not cause concurrence at the same base (goods from the same base are not simultaneously delivered by a plurality of delivery vehicles). However, when there are a plurality of bases and goods from the plurality of bases are delivered to the same base, concurrence between delivery vehicles can occur. Hence, the delivery plan creating part creates delivery plans such that the concurrence does not occur.

Relative priorities between delivery vehicles are indices indicating whether a plan is to be determined on a priority basis upon creating delivery plans, and the higher the priority, the higher the possibility that a delivery plan for a delivery vehicle is determined on a priority basis. The priorities can be represented by various modes, and for example, in a configuration in which a delivery plan with a minimum cost that is computed based on various types of parameters is adopted, an increase in cost for a case of changing a plan for a delivery vehicle with a high priority may be set to be greater than an increase in cost for a delivery vehicle with a low priority. According to this configuration, a delivery vehicle can be recreated such that the higher the priority of a delivery vehicle, the less likely a plan for the delivery vehicle is to be modified. Note that priorities are to be determined based on at least a part of information (e.g., goods to be delivered) included in delivery destination information and base information. In addition, when delivery plans cannot be created by determining a delivery plan for a delivery vehicle with a high priority and modifying a delivery plan for a delivery vehicle with a low priority, the delivery plan for the delivery vehicle with a high priority may be modified.

Priorities may be defined by various modes in addition to the settings exemplified in the above-described embodiment. Namely, priorities may be any priority as long as the priority can be used as an index for identifying whether to modify a created delivery plan. Thus, a configuration may be adopted in which even if concurrence has occurred, if the concurrence can be allowed, then the priorities of corresponding delivery vehicles are considered to be high, and a delivery plan is not modified.

As an example of such a case, for example, there is an example in which a parking space for a delivery destination is sufficiently large and concurrence is not problematic. Specifically, in the above-described embodiment, when delivery plans in which cargo handling is simultaneously performed at the same delivery destination are created, the control part 20 identifies the size of a parking space for the delivery destination. The size of the parking space is defined, for example, as in the delivery destination information 30a shown in FIG. 3.

Then, when the parking space for the delivery destination where simultaneous cargo handling is planned to be performed is larger than a first size, the control part 20 determines that delivery vehicles that are planned to perform deliveries to the delivery destination have higher priorities than a delivery vehicle that is planned to perform a delivery to a delivery destination whose parking space is smaller than the first size. Namely, in this case, delivery plans for the delivery vehicles determined to have high priorities are determined without being modified. As a result, delivery plans are created with concurrence being allowed. According to this configuration, allowed concurrence can be prevented from being modified. The first size may be any index used for relatively comparing at least two parking spaces, and may be a predetermined threshold value or may be the size of a larger one of parking spaces for a delivery destination where simultaneous cargo handling is planned to be performed. The size of a parking space may be determined by various techniques, and for example, the size of a parking space may be an area or may be the number of vehicles that can be parked.

Furthermore, the present invention is also applicable as a program or a method. In addition, a system, a program, and a method such as those described above may be implemented as a single device or may be implemented by using a component shared with each part included in a vehicle, and include various modes. For example, a method or a program that is implemented by a system such as that described above can be provided. In addition, changes can be made as appropriate, e.g., a part is software and a part is hardware. Furthermore, the invention is also feasible as a recording medium for a program that controls a device. Needless to say, the recording medium for software may be a magnetic recording medium or may be a semiconductor memory, and any recording medium to be developed in the future can also be considered exactly in the same manner.

### REFERENCE SIGNS LIST

10: Delivery assistance system, 20: Control part, 21: Delivery assistance program, 21a: Delivery destination information obtaining part, 21b: Base information obtaining part, 21c: Delivery plan creating part, 30: Recording medium, 30a: Delivery destination information, 30b: Base information, 40: Communication part, and 100: Manager's terminal

## Claims

1. A delivery assistance system comprising:
a delivery destination information obtaining part that obtains delivery destination information for each of a plurality of delivery destinations, the delivery destination information including goods to be delivered;
a base information obtaining part that obtains base information including locations of a plurality of bases from which delivery vehicles that deliver the goods depart, and processing abilities of the delivery vehicles for the respective bases; and
a delivery plan creating part that creates, based on the delivery destination information and the base information, delivery plans in which the delivery vehicles for the respective bases do not simultaneously perform cargo handling at a same delivery destination.

2. The delivery assistance system according to claim 1, wherein
the delivery destination information includes a deliverable time slot for each of the plurality of delivery destinations, and
the delivery plans are plans in which the delivery vehicles can perform cargo handling within the deliverable time slots for the respective delivery destinations.

3. The delivery assistance system according to claim 1 or 2, wherein the delivery plan creating part
obtains relative priorities between the delivery vehicles, and
determines a corresponding one of the delivery plans for one of the delivery vehicles with a high priority on a priority basis.

4. The delivery assistance system according to claim 3, wherein
the delivery plan creating part creates the delivery plans, and
when the created delivery plans include a plan in which cargo handling is simultaneously performed at a same delivery destination,
the delivery plan creating part recreates the delivery plans by excluding a period during which the one of the delivery vehicles with a high priority among the delivery vehicles that are planned to simultaneously perform cargo handling performs cargo handling at the delivery destination from a period during which one of the delivery vehicles with a low priority can perform cargo handling at the delivery destination.

5. The delivery assistance system according to claim 4, wherein
the priorities are determined by at least any one of:
a setting in which one of the delivery vehicles loaded with the goods whose necessity for an early delivery is high has a higher priority than one of the delivery vehicles loaded with the goods whose necessity for an early delivery is low;
a setting in which one of the delivery vehicles with small temporal leeway for moving along a corresponding one of the delivery plans has a higher priority than one of the delivery vehicles with large temporal leeway; and
a setting in which one of the delivery vehicles whose required time period that increases with a change in order of deliveries has a higher priority than one of the delivery vehicles whose increasing required time period is small.

6. The delivery assistance system according to claim 4 or 5, wherein when a parking space for the delivery destination where simultaneous cargo handling is planned to be performed is larger than a first size, the delivery vehicles that are planned to perform deliveries to the delivery destination have higher priorities than one of the delivery vehicles that is planned to perform a delivery to one of the delivery destinations whose parking space is smaller than the first size.

7. A delivery assistance system comprising:
a delivery destination information obtaining part that obtains delivery destination information for each of a plurality of delivery destinations, the delivery destination information including goods to be delivered;
a base information obtaining part that obtains base information including locations of a plurality of bases from which delivery vehicles that deliver the goods depart, and processing abilities of the delivery vehicles for the respective bases; and
a delivery plan creating part that creates delivery plans for delivering the goods from the plurality of bases to the plurality of delivery destinations, determines whether the delivery plans include a plan in which the plurality of delivery vehicles simultaneously perform cargo handling at a same delivery destination, and recreates, when it is determined that the delivery plans include the plan, a plan in which the delivery vehicles for the respective bases do not simultaneously perform cargo handling at the same delivery destination, by modifying one of the delivery plans for one of the delivery vehicles with a relatively low priority.
